(19)

Europäisches
Patentamt
European
Patent Office
Office européen
des brevets

(11)  **EP 3 644 483 A1**

(12)  **EUROPEAN PATENT APPLICATION**

(43) Date of publication:
**29.04.2020  Bulletin 2020/18**

(51) Int Cl.:
**H02M 1/08** *(2006.01)*      **H02M 3/156** *(2006.01)*
**H02M 1/00** *(2006.01)*      **H02M 3/157** *(2006.01)*

(21) Application number: **18201732.7**

(22) Date of filing: **22.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ROHM CO., LTD.**
**Kyoto 615-8585 (JP)**

(72) Inventors:
 • **Joita, Adrian**
  **Ukyo-ku, Kyoto 615-8585 (JP)**
 • **Hegner, Stephan**
  **Ukyo-ku, Kyoto 615-8585 (JP)**

(74) Representative: **Isarpatent**
**Patent- und Rechtsanwälte Behnisch Barth
Charles
Hassa Peckmann & Partner mbB
Friedrichstrasse 31
80801 München (DE)**

(54)  **CIRCUIT AND METHOD FOR CONTROLLING A DC/DC-CONVERTER AND
DC/DC-CONVERTER**

(57)     Enhanced controlling of a DC/DC-converter, in particular of a step-down converter. A current through a low-side switch of the DC/DC-converter is sensed, and a voltage signal corresponding to the sensed current is sample-and-hold. Based on the sample-and-hold voltage signal a feedback loop for regulating the control signals of the DC/DC-converter is performed. Since the regulation is based on a sample-and-hold signal, the further elements in the feedback loop only require low bandwidth. Thus, a reliable and stable regulation of the DC/DC-converter can be achieved.

FIG 2

EP 3 644 483 A1

**Description**

The present invention relates to a circuit for controlling a DC/DC-converter. The present invention further relates to a method for controlling a DC/DC-converter. In particular, the present invention relates to a DC/DC-converter comprising a high-side switch and a low-side switch.

Background

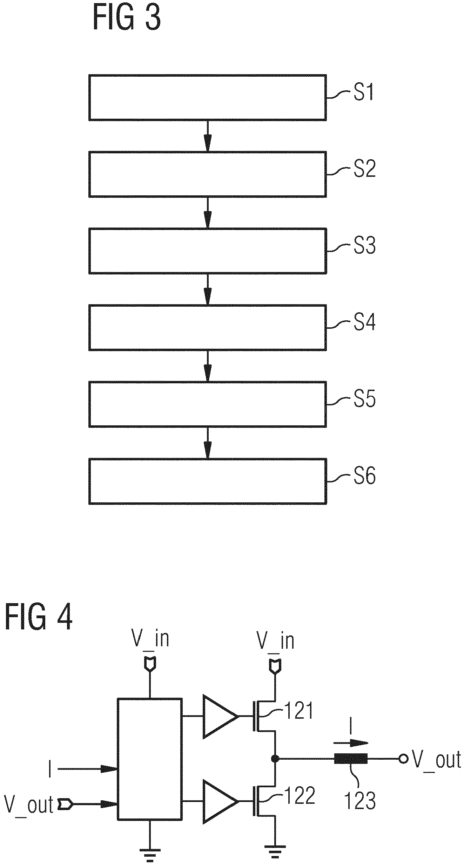

Even though applicable in general to any kind of a DC/DC-converter (direct current to direct current converter), the present invention and its underlying problem will be hereinafter described in connection with a step-down converter. Step-down converters are used in much kind of applications for converting a DC input voltage down to a lower and stabilized DC output voltage. An example of a DC/DC-converter is shown in Figure 4. An output of such a DC/DC-converter may contain a LC-network where the regulated output voltage V_out is between an inductor 123 and a capacitor 124. A high-side transistor 121 is connected between an input voltage V_in and the inductor 123, and a low-side transistor 122 is connected between the inductor 123 and a ground potential.

When the high-side transistor 121 is on, the low-side transistor 122 is off, so that the difference V_in - V_out over the inductor 123 causes a linear uprising current through the inductor 123. When the high-side transistor 121 is off, the low-side transistor 122 is on, so that -V_out over the inductor 123 causes a linear falling current through this inductor 123. The ratio between an on-time of the high-side transistor 121 and a switching period T is called duty cycle D.

The output voltage V_out may be controlled by changing the duty cycle D in response to a load current I_out provided by the DC/DC-converter. For a stable output voltage V_out, two feedback loops may be needed - a voltage loop and a current loop. A feedback path may provide the output voltage V_out to a regulator circuit for controlling the duty cycle. A further current loop may sense a current flowing through the inductor and provide the current information to the regulator.

Modern DC/DC-converters apply increasing clock rates for switching on and off the high-side and low-side transistors. However, higher clock rates require higher bandwidths for sensing the output parameters of the DC/DC-converter, in particular for sensing the output current.

Against this background, it is an object of the present invention to provide an improved controlling for a DC/DC-converter. In particular, the present invention aims to provide an improved controlling of a DC/DC-converter, which can achieve a stable controlling of DC/DC-converters with high clock rates.

Summary

The present invention provides a circuit for controlling a DC/DC-converter, a method for controlling a DC/DC-converter and a DC/DC-converter with the features of the independent claims. Further advantageous embodiments are subject-matter of the dependent claims.

According to a first aspect, a circuit for controlling a DC/DC-converter is provided. The DC/DC-converter includes a high-side switch and a low-side switch. The circuit comprises a current sensing circuit, a sample-and-hold circuit, an amplifier and a control circuit. The current sensing circuit is adapted to provide a current voltage. The current voltage may correspond to a current through the low-side switch. The sample-and-hold circuit is adapted to sample the current voltage provided by the current sensing circuit. The sample-and-hold circuit is further adapted to hold the sampled current voltage and to provide a sample-and-hold voltage. The sample-and-hold voltage may correspond to the sampled current voltage, which is hold by the sample-and-hold circuit. The amplifier is adapted to amplify the sample-and-hold voltage and to provide the amplified voltage as an amplified voltage signal to the control circuit. The control circuit is adapted to provide control signals to the high-side switch and the low-side switch. In particular, a first control signal is provided to the high-side switch and a second control signal is provided to the low-side switch. The control signals are generated based on the amplified voltage signal provided by the amplifier.

According to a second aspect, a DC/DC-converter is provided. The DC/DC-converter comprises a high-side switch, a low-side switch and a circuit for controlling the DC/DC-converter according to the first aspect. The high-side switch is arranged between an input voltage terminal and a node. The low-side switch is arranged between the node and a reference potential.

According to a third aspect a method for controlling a DC/DC-converter is provided. The DC/DC-converter includes a high-side switch and a low-side switch. The method comprises a step of providing a current voltage corresponding to a current through the low-side switch. The method further comprises a step of sampling the provided current voltage, holding the sampled current voltage and providing a sample-and-hold voltage based on the hold sampled current voltage. The method further comprises the steps of amplifying the sample-and-hold voltage, generating control signals based on the amplified sample-and-hold voltage and providing the generated control signals to the high-side switch and low-side switch, respectively.

The present invention is based on the fact that DC/DC-converters with high clock rates usually require broadband circuits, which can deal with high frequencies. In particular, controlling a DC/DC-converter requires feedback circuits for sensing and analyzing the output of the DC-converter, in order to adapt the controlling of the DC/DC-converter to achieve desired output properties, such as a desired output voltage. However, broadband components, which can deal with high frequencies usually are expensive and require larger silicon space.

The present invention therefore takes into account these facts and aims to provide a controlling of a DC/DC-converter, which can deal with high clock rates. In particular, the present invention aims to provide a controlling of a DC/DC-converter, which does not require broadband components for high frequencies in the feedback loop.

It is for this purpose that the present invention uses a sample-and-hold circuit for sampling and holding a voltage corresponding to the output current of the DC/DC-converter. Subsequently, only the hold voltage signal provided by the sample-and-hold circuit has to be further processed, for example, by amplifying the hold voltage signal. Since the voltage signal provided by the sample-and-hold circuit is almost constant, no further broadband elements have to be used in such a control circuit. In this way, the control circuit can be simplified and cheaper and more robust components can be used for controlling the DC/DC-converter, in particular for realizing the feedback loop in such a controller of a DC/DC-converter.

In a possible embodiment, the circuit for controlling the DC/DC-converter comprises a ramp generator. The ramp generator is adapted to provide a voltage ramp signal based on the provided amplified voltage signal. The generated voltage ramp signal is provided to the regulator circuit. The regulator circuit may be adapted to generate the control signals based on the voltage ramp signal provided by the ramp generator.

Accordingly, the ramp generator may generate a voltage ramp signal which simulates a current flowing through an inductor at the output of the DC/DC-converter, in particular an inductor between a node connecting the high-side switch and the low-side switch and an output terminal of the DC/DC-converter. Accordingly, a simulated current signal may be used as an input signal for controlling the duty cycles of the signals for the high-side switch and the low-side switch by the regulator circuit.

In a possible embodiment, the ramp generator is adapted to generate the voltage ramp signal having an upslope corresponding to an upslope of an output current of the DC/DC-converter. By a voltage ramp signal having an upslope corresponding to the upslope of the current the output of the DC/DC-converter, the duty cycle of the control signals for controlling the high-side switch and the low-side switch can be adapted accordingly. In particular, the output current of the DC/DC-converter may correspond to the current through an inductor as described above.

In a possible embodiment, the ramp generator is adapted to provide the voltage ramp signal based on an input voltage of the DC/DC-converter and/or an output voltage of the DC/DC-converter. The voltage ramp may be in a range between the output voltage and the input voltage of the DC/DC-converter. In particular, an internal voltage ramp generated by the ramp generator may be shifted up or down according to the amplified voltage signal.

In a possible embodiment, the sampling of the sample-and-hold circuit is synchronized with the generation of the control signals by the regulator circuit. For example, the sample-and-hold circuit may sample the current voltage and hold the sampled current voltage when the low-side switch is open. Accordingly, the sample-and-hold operation is performed each time when a current is flowing through the open low-side switch.

In a possible embodiment, the circuit for controlling the DC/DC-converter may comprise a clock generator. The clock generator may be adapted to provide a clock signal. In particular, a same clock signal may be provided to the sample-and-hold circuit and the regulator circuit. In this way, the sample-and-hold operation of the sample-and-hold circuit may be synchronized with the generation of the control signals by the regulator.

In a possible embodiment, the current sensing circuit may be adapted to generate a current voltage based on a voltage drop over the low-side switch. For example, the current through the low-side switch may be determined based on the voltage drop and a known internal resistance of the low-side switch.

However, any other kind of a current sensing circuit may be also possible; For example, it may be possible to determine the current by a voltage drop of an additional measurement resistor. Any other circuit for determining a current through a path of the low-side switch may be possible, too.

In a possible embodiment, the amplifier may comprise an operational amplifier, in particular a differential amplifier. The first input terminal of the operational amplifier may be connected to the sample-and-hold circuit.

A second input terminal of the operational amplifier may be connected, for example, to a ground potential. Accordingly, a conventional operational amplifier may be used for amplifying the current voltage provided by the current sensing circuit. However, any other kind of an amplifier for amplifying the current voltage provided by the current sensing circuit may be also possible.

In a possible embodiment, the regulator circuit may be adapted to generate control signals based on a voltage signal corresponding to an output voltage of the DC/DC-converter. Accordingly, the regulator circuit may take into account not only the output current of the DC/DC-converter, but also the output voltage of the DC/DC-converter. Furthermore, it may be also possible to take into account the input voltage of the DC/DC-converter. Accordingly, by taking into account two feedback loops, namely the output voltage and a current signal, a stable and precise controlling of the output of the DC/DC-converter can be achieved.

In a possible embodiment, at least the sample-and-hold circuit, the amplifier and the regulator circuit are implemented on a common semiconductor chip. In this way, a space saving and compact arrangement for controlling the DC/DC-converter can be achieved. However, it is understood that further circuits, for example the current sensing circuit, the regulator circuit, etc. may be also implemented in the common semiconductor chip.

In a possible embodiment of the DC/DC-converter, the DC/DC-converter may further comprise an inductor. The inductor may be arranged between the node connecting the high-side switch and the low-side switch, and the output terminal of the DC/DC-converter.

In a possible embodiment of the control method, the method may comprise a step of generating a voltage ramp signal. The voltage ramp signal may be generated based on the provided amplified voltage signal. In this case, the control signals may be generated based on a generated voltage ramp signal.

With the present invention it is therefore now possible to achieve an enhanced controlling of a DC/DC-converter. In particular, the DC/DC-converter may include a feedback loop for the output current, which does not require broadband components having a high frequency range. By sampling and holding a signal corresponding to an output current of the DC/DC-converter, the sample-and-hold signal can be subsequently processed by circuits requiring only a lower frequency range. In this way, a reliable, stable controlling of the DC/DC-converter can be achieved. Furthermore, the controlling can be realized by components requiring only a lower frequency range, and thus being more robust and less expensive.

In the following, possible embodiments of different aspects of the present invention are described in more detail with reference to the enclosed figures, in which:

Figure 1    shows a circuit diagram of a possible exemplary embodiment of a DC/DC-converter with a circuit for controlling the DC/DC-converter according to an embodiment of the present invention;

Figure 2    shows a circuit diagram of a further exemplary embodiment of a DC/DC-converter according to an embodiment of the present invention;

Figure 3    shows a flowchart of a method for controlling a DC/DC-converter according to an embodiment; and

Figure 4    shows a conventional DC/DC-converter.

Description of embodiments

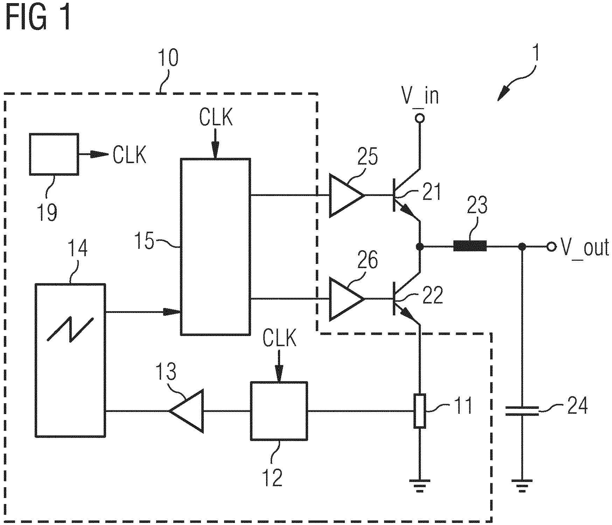

Figure 1 shows a circuit diagram of a DC/DC-converter 1 according to an embodiment. The DC/DC-converter 1 comprises a control circuit 10 for controlling the DC/DC-converter 1. The control circuit 10 provides a first control signal to a first switch 21, and a second control signal to a second switch 22. The first switch 21 may be a high-side switch, which is arranged between an input voltage V_in and a node N. The second switch 22 may be a low-side switch, which is arranged between the node N and a ground potential. An inductor 23 may be arranged between the node N and an output terminal of the DC/DC-converter 1. A capacitor 24 may be further connected with the output terminal of the DC/DC-converter. In particular, the capacitor 24 may be arranged between the output terminal and the ground potential.

When the high-side switch 21 is on and the low-side switch 22 is off, the input voltage V_in is provided to the node N and a voltage V_in - V_out is over the inductor 23, which causes a linear uprising current to this inductor 23. When the high-side switch 21 is off and the low-side switch 22 is on, the ground potential is applied to node N and a voltage -V_out is over the inductor 23 causing a linear filing current through this inductor 23. The ratio between the one time of the upside switch 21 and the whole switching period T is a duty cycle D. The triangular shaped current through the inductor 23 is feed to the capacitor 24, and the output voltage V_out is provided at an output terminal of the DC/DC-converter 1.

The control signals for switching the high-side switch 21 and the low-side switch 22 on and off are generated by a regulator 15. Accordingly, regulator 15 generates a first control signal for switching on and off the high-side switch 21, and a second control signal for switching on the low-side switch 22. Additional driver circuits 25 and 26 may be provided for driving the high-side switch 21 and a low-side switch 22, respectively.

As already mentioned above, the first control signal for switching on and off the high-side switch 21 may be almost complementary to the second control signal for switching on and off the low-side switch 22. However, in order to avoid short circuits, there may be additional dead times in which both, the high-side switch 21 and the low-side 22 are switched off, such that the high-side switch 21 is switched off before the low-side switch 22 is switched on, and accordingly, the low-side switch 22 is switched off before the high-side switch 21 is switched on. In this way, it can be guaranteed that no short circuit between the input voltage and the ground potential is performed.

In order to achieve desired output parameters, such as a desired output voltage V_out, regulator 15 uses a feedback loop. In particular, a current of the DC/DC-converter 1 may be taken into account for setting the duty cycle of the control signals provided by regulator 15. For example, regulator 15 may take into account a current through inductor 23. In the following, an arrangement for determining the current through inductor 23 is described.

A current through the low-side switch 22 may be determined by a current sensing circuit 11. For example, the current through low-side switch 22 may be measured by a voltage drop over a measurement resistor in a current path between the ground potential and the node N. Alternatively, it may be also possible to take into account a voltage drop over the low-side switch 22. Furthermore, any other scheme for determining a current through low-side switch 22 may be also possible. Current sensing circuit 11 may provide a current voltage signal corresponding to the current through the low-side switch 22. This current voltage signal is provided to a sample-and-hold circuit 12. Sample-and-hold circuit 12 may sample the current voltage signal provided by current sensing circuit 11. Further, sample-and-hold circuit 12 may hold the sampled current voltage signal and provide a sample-and-hold voltage. In particular, the sample-and-hold operation of the sample-and-hold circuit 12 may be synchronized with the clock rate for generating the control signal to the high-side switch 21 and the low-side switch 22. For this purpose, a common clock generator 19 may be provided. The clock generator 19 may provide a clock signal to the sample-and-hold circuit 12 and to regulator 15. In this way, it is possible that the sample-and-hold circuit 12 may sample-and-hold the current voltage signal when the low-side switch 22 is closed and a current is flowing through the low-side switch 22.

The sample-and-hold voltage signal is provided to an amplifier 13. Amplifier 13 may receive the sample-and-hold voltage and apply a predefined amplification to the sample-and-hold voltage. Accordingly, an amplified voltage signal is provided by amplifier 13. This amplified voltage signal may be used as a basis for generating the control signals of the high-side switch 21 and the low-side switch 22. In particular, the amplified voltage signal may be provided to a ramp generator 14, and the ramp generator 14 may generate a voltage ramp signal based on the provided amplified voltage signal. In particular, the voltage ramp signal generated by a ramp generator 14 may be a signal corresponding to the current flowing through inductor 23. Accordingly, the ramp signal provided by ramp generator 14 to the regulator 15 may be a signal corresponding to the current through inductor 23. In this way, regulator 15 may use this signal as a feedback signal for controlling the generation of the control signals for the high-side switch 21 and the low-side switch 22. Ramp generator 14 may further take into account the input voltage V_in and/or the output voltage V_out. Accordingly, a voltage ramp signal may be generated in an appropriate range, for example a range between the output voltage V_out and the input voltage V_in. Furthermore, the ramp signal may be shifted up or down according to the amplified sample-and-hold voltage provided by amplifier 13. In this way, the ramp generator 14 can generate a voltage ramp signal corresponding to a current through the inductor 23. In particular, the ramp voltage signal may have an upslope, which corresponds to the upslope of the current through the inductor 23. In this way, a signal may be generated and provided to regulator 15, which corresponds to the current through the inductor 23 and an appropriate feedback control can be achieved.

Furthermore, it may be possible to provide a signal corresponding to the output voltage V_out to regulator 15. Accordingly, a further feedback loop based on the output voltage V_out can be applied. Regulator 15 may further take into account the level of the input voltage V_in. Additionally, an input signal may be provided to regulator 15 indicating a desired output voltage. In this way, a variable output voltage can be achieved. Based on the provided control signals, regulator 15 may determine an appropriate duty cycle and provide control signals to the high-side switch 21 and the low-side switch 22. In this way, the output voltage V_out can be controlled by adapting a duty cycle of the pulse width modulated signals provided to the high side switch 21 and the low side switch 22.

Since the generation of the signal corresponding to the current through the inductor 23 is performed based on the sample-and-hold voltage, all circuit elements in a signal path after the sample-and-hold circuits are based on relative low frequencies. Thus, the respective components do not require a high bandwidth related to high frequencies.

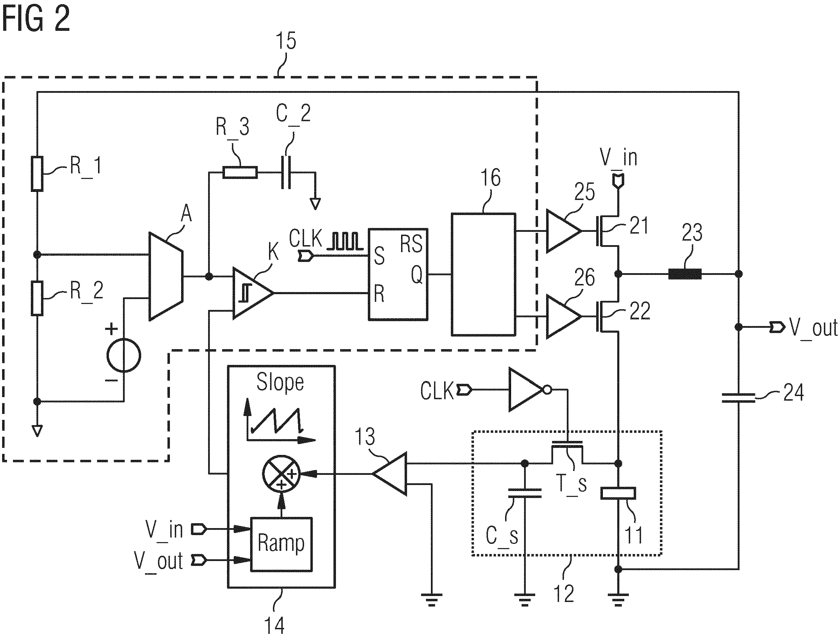

Figure 2 shows a further circuit diagram of a DC/DC-converter 1 with a control circuit 10 according to an embodiment. The DC/DC-converter 1 according to this embodiment mainly corresponds to the previously described DC/DC-converter 1. Thus, the explanation provided before in connection with Figure 1 also applies to this embodiment and vice versa.

As can be seen in Figure 2, the sample-and-hold circuit 12 may be realized by a circuit comprising a transistor T_s, and a capacitor C_s. The transistor T_s is controlled based on a clock signal provided by clock generator 19. The sample-and-hold voltage provided by the sample-and-hold circuit 12 may be provided to an amplifier 13, for example an operational amplifier. For example, the operational amplifier may be a differential amplifier, wherein a first input is connected to the sample-and-hold circuit 12 and a second input is connected to a ground potential. The output of the amplifier 13 is provided to ramp generator 14. Ramp generator 14 generates a ramp signal based on the input voltage V_in and the output voltage V_out. Furthermore, the ramp signal may be shifted based on the amplified signal provided by amplifier 13. Accordingly, ramp generator 14 generates a ramp signal having a slope corresponding to a current through inductor 23.

The output of ramp generator 14 may be provided to driver logic 16. Driver logic 16 may further take into account the output voltage provided at an output terminal of the DC/DC-converter 1. Furthermore, the operation of regulator 15, in particular of driver logic 16, may be also based on the clock signal provided by clock generator 19. Accordingly, the sample-and-hold operation of a sample-and-hold circuit 12 and the generation of the control signals by regulator 15 both are performed based on a same clock signal of clock generator 19.

The internal clock signal CLK serves as a signal for the driver logic 16 and initializes a switching cycle.

Depending on the input voltage V_in, the output voltage V_out and the load current (according to the ramp signal provided by ramp generator 14), the driver logic 16reacts with a change in the duty cycle until a steady state condition is reached for a stable output voltage V_out. To regulate the duty cycle, a comparator K compares two kinds of signals, representing the output voltage information based on V_out and the output current information based on the ramp voltage signal.

The voltage information is generated by a feedback loop, which catches a part of V_out by the voltage divider of R_1 and R_2 amplified by a transconductance amplifier A that feeds a RC network of R_3 and C_2 and thus, generates a voltage level that turns and controls the peak inductor current.

The further input of the comparator K is the ramp voltage signal, which emulates the current through inductor 23. The ramp voltage signal comprises two components. A first component is a ramp generated by a current, which charges an internal capacitor (not shown). The second component is an offset, which contains the actual current information and is generated by the sample-and-hold circuit 12 and the amplifier 13. A current sense circuit 11 senses the current flowing through the low-side switch 22 while the high-side 21 switch is off and the low-side switch 22 is on. The sense circuit 11 transfers the current into a current voltage. The current voltage is sampled and thus becomes a fixed voltage level for the duration of the period time T. The sample-and-hold voltage is amplified by amplifier 13, which lifts or drops the internal ramp of the ramp generator 14 by an offset. Thus, the current information of inductor 23 is introduced in the regulation loop. In this way, the duty cycle of the control signals provided by regulator 15 is adapted accordingly. The result of the both regulation loops, namely the voltage regulation loop and the current regulation loop is a variation in the duty cycle D at the node N, which follows the rule:

$$D = V\_out/V\_in.$$

Accordingly, the regulation of the duty cycle D corresponds to the regulation of the output voltage V_out and the quantity of the regulation depends on the voltage loop and the current loop. By providing the clock signal of clock generator 19 to a RS latch that controls the power transitions, the latch is reset by the comparator K when the voltage ramp signal exceeds the further signal provided to comparator K, and the high-side switch 21 is turned off.

When the output voltage V_out is low (e.g. due to load transitions), the voltage of the transconductance amplifier A increases and more current will be driven through the inductor 23. In this way, the output voltage V_out is regulated up. If the output voltage V_out is too high, then a less current will be delivered and the duty cycle D is reduced.

Figure 4 shows a flow diagram illustrating a method for controlling a DC/DC-converter 1 according to an embodiment.

The method comprises a step S1 of providing a current voltage corresponding to a current through a low-side switch 22 of the DC/DC-converter 1. The method further comprises a step S2 of sampling the provided current voltage, and a step S3 of holding the sampled current voltage and providing a sample-and-hold voltage based on the hold sampled current voltage. In a step S4 the sample-and-hold voltage is amplified, and in step S5 control signals are generated based on the amplified voltage signal. In step S6, the generated control signals are provided to the high-side switch 21 and the low-side switch 22.

Summarizing, the present invention provides an enhanced controlling of a DC/DC-converter, in particular of a step-down converter. A current through a low-side switch of the DC/DC-converter is sensed, and a voltage signal corresponding to the sensed current is sample-and-hold. Based on the sample-and-hold voltage signal a feedback loop for regulating the control signals of the DC/DC-converter is performed. Since the regulation is based on a sample-and-hold signal, the further elements in the feedback loop only require low bandwidth. Thus, a reliable and stable regulation of the DC/DC-converter can be achieved.

Since the feedback path does not require components having a high bandwidth, the DC/DC-converter can be executed with high frequencies, in particular clock rates in a range of one or two megahertz or even more. In this way, a high accuracy of the output voltage can be achieved.

**Claims**

1. Circuit (10) for controlling a DC/DC-converter (1), the DC/DC-converter (1) including a high-side switch (21) and a low-side switch (22), the circuit (10) comprising:

   a current sensing circuit (11), adapted to provide a current voltage corresponding to a current through the low-side switch (22);
   a sample-and-hold circuit (12), adapted to sample the current voltage provided by the current sensing circuit (11), to hold the sampled current voltage and to provide a sample-and-hold voltage;
   an amplifier (13), adapted to amplify the sample-and-hold voltage and to provide an amplified voltage signal; and
   a regulator circuit (15), adapted to provide control signals to the high-side switch (21) and the low-site switch (22), wherein the control signals are generated based on the amplified voltage signal.

2. Circuit (10) according to claim 1, comprising a ramp generator (14) adapted to provide a voltage ramp signal based on the provided amplified voltage signal, and to provide the generated voltage ramp signal to the regulator circuit (15); wherein the regulator circuit (15) is adapted to generate the control signals based on the voltage ramp signal;

3. Circuit according (10) to claim 1, wherein ramp generator (14) is adapted to generate the voltage ramp signal having an upslope corresponding to an upslope of an output current of the DC/DC-converter (1).

4. Circuit (10) according to any of claims 1 to 3, wherein the ramp generator (14) is adapted to provide the voltage ramp signal based on an input voltage (V_in) and an output voltage (V_out) of the DC/DC-converter (1).

5. Circuit (10) according to any of claims 1 to 4, wherein the sampling of the sample-and-hold circuit (12) is synchronized with the generation of the control signals by the regulator circuit (15).

6. Circuit (10) according to any of claims 1 to 5, comprising a clock generator (19), adapted to provide a clock signal (CLK), wherein the clock signal (CLK) is provided to the sample-and-hold circuit (12) and the regulator circuit (15).

7. Circuit (10) according to any of claims 1 to 6, wherein the current sensing circuit (11) is adapted to generate the current voltage based on a voltage drop over the low-side switch (22).

8. Circuit (10) according to any of claims 1 to 7, wherein the amplifier (13) comprises an operational amplifier, and a first input terminal of the operational amplifier is connected to the sample-and-hold circuit (12) and a second input terminal of the operational amplifier is connected to a ground potential.

9. Circuit (10) according to any of claims 1 to 8, wherein the regulator circuit (15) is adapted to generate the control signals based on a voltage signal corresponding to an output voltage (V_out) of the DC/DC-converter (1)

10. Circuit (10) according to any of claims 1 to 9, wherein at least the sample and-hold circuit (12), the amplifier (13), and the regulator circuit (15) are implemented on a common semiconductor chip.

11. DC/DC-converter (1), comprising:

a high-side-switch (21) arranged between an input voltage terminal and a node (N); a low-side-switch (22) arranged between the node (N) and a reference potential; and a circuit (10) for controlling the DC/DC-converter (1) according to any of claims 1 to 10.

12. DC/DC-converter (1) according to claim 11, comprising an inductor (23) arranged between the node (N) and an output terminal of the DC/DC-converter (1).

13. DC/DC-converter (1) according to claim 11 or 12, comprising a first driver stage (25) for driving the high-side-switch (21) based on the first control signal provided by the regulator circuit (15); and a second driver stage (26) for driving the low-side-switch (22) based on a second control signal provided by the regulator circuit (15).

14. A method for controlling a DC/DC-converter, the DC/DC-converter (1) including a high-side switch (21) and a low-side switch (42), the method comprising:

providing (S1) a current voltage corresponding to a current through the lower-side switch (22); sampling (S2) the provided current voltage; holding (S3) the sampled current voltage and providing a sample-and-hold voltage based on the hold current voltage; amplifying (S4) the sample-and-hold voltage:

generating (S5) control signals based on the amplified voltage signal; and providing (S6) the generated control signals to the high-side switch (21) and the low-site switch (22).

15. Method according to claim 14, comprising generating a voltage ramp signal based on the provided amplified voltage signal, wherein the control signals are generated based on the generated voltage ramp signal.

FIG 1

FIG 2

EP 3 644 483 A1

## FIG 3

## FIG 4

Europäisches Patentamt
European Patent Office
Office européen des brevets

# EUROPEAN SEARCH REPORT

Application Number

EP 18 20 1732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 045 993 B1 (TOMIYOSHI KENJI [US]) 16 May 2006 (2006-05-16) * figures 1, 3 * | 1-15 | INV. H02M1/08 H02M3/156 |
| X | US 7 372 238 B1 (TOMIYOSHI KENJI [JP]) 13 May 2008 (2008-05-13) * figures 1, 3 * | 1-15 | ADD. H02M1/00 H02M3/157 |
| X | WO 2017/124115 A1 (DIALOG SEMICONDUCTOR LTD [GB]; DIALOG SEMICONDUCTOR INC [US]) 20 July 2017 (2017-07-20) * figures 1-3 * * paragraph [0024] * * paragraph [0033] * | 1-15 | |
| A | US 8 395 367 B2 (CHIEN MIN-CHU [TW]; HUANG YUNG-PENG [TW]; UPI SEMICONDUCTOR CORP [TW]) 12 March 2013 (2013-03-12) * figure 1 * | 4 | |

TECHNICAL FIELDS SEARCHED (IPC)

H02M

The present search report has been drawn up for all claims

| Place of search | Date of completion of the search | Examiner |
|---|---|---|
| The Hague | 11 April 2019 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 1732

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2019

| Patent document cited in search report | | Publication date | Patent family member(s) | | Publication date |
|---|---|---|---|---|---|
| US 7045993 | B1 | 16-05-2006 | US<br>US | 7045993 B1<br>7119522 B1 | 16-05-2006<br>10-10-2006 |
| US 7372238 | B1 | 13-05-2008 | US<br>US | 7372238 B1<br>7372241 B1 | 13-05-2008<br>13-05-2008 |
| WO 2017124115 | A1 | 20-07-2017 | DE<br>US<br>WO | 112017000391 T5<br>2018219484 A1<br>2017124115 A1 | 27-09-2018<br>02-08-2018<br>20-07-2017 |
| US 8395367 | B2 | 12-03-2013 | TW<br>US<br>US<br>US | 201106597 A<br>2011031948 A1<br>2013147456 A1<br>2014084891 A1 | 16-02-2011<br>10-02-2011<br>13-06-2013<br>27-03-2014 |

EPO FORM P0459

For more details about this annex : see Official Journal of the European Patent Office, No. 12/82